# EUROPÄISCHE PATENTSCHRIFT

(11) **EP 3 398 761 B1**
(45) Veröffentlichungstag und Bekanntmachung des Hinweises auf die Patenterteilung: **11.03.2020**
(21) Anmeldenummer: 18167452.4
(22) Anmeldetag: 16.04.2018
(51) Int. Cl.: B29D 99/00, B33Y 80/00, B29C 70/74, B33Y 10/00, B29C 64/10, B29C 64/118

(54) **VERFAHREN ZUR ERHÖHUNG DER STEIFIGKEIT VON VLIESFORMTEILEN MITTELS ADDITIVER FERTIGUNG**
METHOD FOR INCREASING THE RIGIDITY OF NONWOVEN FABRIC FORMED PARTS USING ADDITIVE MANUFACTURING
PROCÉDÉ D'AUGMENTATION DE LA RIGIDITÉ DE PIÈCES MOULÉES EN TISSU NON-TISSÉ AU MOYEN DE LA FABRICATION ADDITIVE

(30) Priorität: 04.05.2017 DE 102017109551
(43) Veröffentlichungstag der Anmeldung: 07.11.2018
(73) Patentinhaber: Sandler AG, 95126 Schwarzenbach/Saale (DE)
(72) Erfinder: Sommer, Heinrich, 95145 Oberkotzau (DE)
(74) Vertreter: Grünecker Patent- und Rechtsanwälte PartG mbB

(56) Entgegenhaltungen:
- EP-A2- 2 189 272
- WO-A1-2017/093264
- US-A1- 2014 020 192
- US-A1- 2015 147 539

## Beschreibung

Die vorliegende Erfindung betrifft ein Verfahren zur Erhöhung der Steifigkeit von Vliesformteilen mittels additiver Fertigung. Insbesondere betrifft die Erfindung ein Verfahren zur Herstellung eines Bauteils entsprechend dem Oberbegriff des unabhängigen Anspruchs 1 und ein Bauteil entsprechend dem Oberbegriff des unabhängigen Anspruchs 14.

Im Stand der Technik werden derartige Bauteile überwiegend mithilfe von Spritzgusswerkzeugen hergestellt. Hierbei wird ein zu versteifendes Vlies in einem Spritzgusswerkzeug eingelegt und vorgewärmt, bevor es mit einem Kunststoff versehen wird. Je größer die Oberfläche des herzustellendes Bauteils, desto größer müssen die Spritzgusswerkzeuge und die entsprechende Maschinen ausgelegt werden. Die benötigte Anlagentechnik wird dadurch sehr aufwendig.

Die Zunahme von Nischen- und Spezialmodellen der Automobilbauer schlägt sich in einer niedrigeren Anzahl der Losgrößen nieder. Bei kleinvolumigen Fahrzeugserien schlagen die Investitionskosten für aufwendige Spritzgusswerkzeuge überproportional auf die Einzelkosten der Bauteile durch.

Die DE 10 2011 009 148 A1 offenbart ein Verfahren zur Herstellung eines Bauteils insbesondere für einen Kraftwagen bei welchem ein Vlies zumindest bereichsweise mit einem Kunststoff versehen wird, dadurch gekennzeichnet, dass das Vlies zeitlich vor dem Versehen mit dem Kunststoff erwärmt wird. Bei diesem Verfahren wird das Vlies zumindest bereichsweise in ein Spritzgießwerkzeug eingelegt und mittels des Spritzgießwerkzeugs mit dem Kunststoff versehen.

Die DE 10 2004 009 245 A1 offenbart ein Verfahren und ein Kunststoffformteil aus einem Vlies und einem Kunststoff, bei dem die vom Kunststoff abgewandte Seite der Vliesschicht eine Strukturierung aufweist, die das abschließende Dekor des Kunststoffformteiles bildet.

Die Druckschriften EP 2 189 272 A2, US 2015/147539 A1, US 2014/020192 A1 und WO 2017/093264 A1 offenbaren jeweils Verfahren nach dem Oberbegriff des unabhängigen Anspruchs 1.

Es ist daher Aufgabe der vorliegenden Erfindung, ein günstiges und flexibles Verfahren für die Herstellung von versteiften Bauteilen, insbesondere für einen Kraftwagen, zur Verfügung zu stellen. Des Weiteren ist Aufgabe der Erfindung, ein versteiftes Bauteil, insbesondere für einen Kraftwagen, bereitzustellen.

Diese Aufgabe wird durch ein Verfahren zum Herstellen eines Bauteils mit den Merkmalen des unabhängigen Anspruchs 1 und durch ein entsprechendes Bauteil mit den Merkmalen des unabhängigen Anspruchs 14 gelöst. Bevorzugte Ausführungsformen und Weiterbildungen der Erfindung sind in den abhängigen Ansprüchen angegeben.

Der erste Aspekt der Erfindung betrifft ein Verfahren zum Herstellen eines Bauteils, insbesondere für einen Kraftwagen, bei welchem ein Vlies zumindest bereichsweise mit einem Kunststoff versehen wird. Beim zu versehendem Kunststoff handelt es sich um einen oder mehrere Kunststoffkörper mit Streifenform, die mittels 3D-Druck aufgebracht werden. Unter "3D-Druck" werden alle additiven oder generativen Herstellverfahren zusammengefasst, bei denen ein Werkstoff schichtweise auf ein Vlies gedruckt wird. 3D-Druckverfahren haben den Vorteil, dass sie Kunststoffkörper auf ein Vlies aufbringen können, ohne dass dafür Spritzgießwerkzeuge hergestellt werden müssen, was eine günstigere Produktion ermöglicht. Bei den aufzubringenden streifenförmigen Kunststoffkörpern kann es sich um jeden Kunststoff handeln, der auf das Vlies mittels 3D-Druck aufgebracht werden kann. 3D-Drucker haben den Vorteil, dass sie im Markt für feine und grobe Druckvorgänge breit vertreten sind und deren Ersatzteile einfach zu bekommen sind. Das fertige Bauteil weist eine selektiv erhöhte Biegesteifigkeit und kann beispielsweise in einer Fahrzeugunterseite eingebaut werden.

Anschließend werden erfindungsgemäß unter Druck- und Wärmezuführung die auf das Vlies mittels 3D-Druck aufgebrachten Kunststoffkörper in ihn eingepresst. Damit weist das Bauteil eine einheitliche Dicke auf und dessen Integration in den vorgesehenen Einbauraum wird deutlich erleichtert.

Gemäß einer Ausgestaltung der Erfindung handelt es sich bei den streifenförmigen Kunststoffkörpern um Verstärkungsrippen. Verstärkungsrippen erhöhen die Biegefestigkeit des Bauteils und erhöhen das Bauteilgewicht nur in geringen Maßen.

Die Verstärkungsrippen können eine beliebige Geometrie bilden. In einer vorteilhaften Ausgestaltung können die Verstärkungsrippen als Wabenstrukturen aufgebracht werden. Sie haben den Vorteil, bei geringer Gewichtszunahme, die Biegefestigkeit des Vliesstoffes besonders stark zu erhöhen.

Gemäß einer weiteren Ausgestaltung werden die Verstärkungsrippen in den Bereichen des Vlieses aufgebracht, in denen im späteren Einsatz erhöhte Bauteilspannungen auftreten. Bauteile können dadurch noch leichter gemacht werden, indem sie nur in den Bereichen versteift werden, in denen sie mechanisch beansprucht werden.

Gemäß einer weiteren Ausgestaltung der Erfindung werden streifenförmige Kunststoffkörper auf beide Seiten des Vlieses aufgedruckt. Diese Anordnung hat den Vorteil, dass sie die Biegefestigkeit des Bauteils auf jeder Seite des Vlieses erhöhen kann.

Gemäß einer vorteilhaften Ausgestaltung der Erfindung liegen die auf einer Seite des Vlieses aufgebrachte streifenförmige Kunststoffkörper gegenüber den auf der anderen Seite des Vlieses aufgebrachten streifenförmigen Kunststoffkörpern. Solche Strukturen werden in der Technik auch unter Ausbildung von Sandwichstrukturen ausgestaltet und ermöglichen die Aufnahme von erhöhten Biegespannungen in Form von Druck- und Zugkräften bei geringer Strukturmassenzunahme durch die Versteifungen.

Vorteilhafterweise handelt es sich bei dem Vlies um einen thermisch verfestigten Vliesstoff mit Schmelzfasern. Thermisch verfestigte Vliesstoffe haben den Vorteil dass sie eine erhöhte Festigkeit vorweisen. Des Weiteren können Vliesstoffe mit Schmelzfasern unter Wärmezufuhr stärker verformt werden, was die Verarbeitbarkeit des Vlieses verbessert.

Gemäß einer weiteren vorteilhaften Ausgestaltung der Erfindung liegt der Schmelzpunkt der thermoplastischen streifenförmigen Kunststoffkörper über dem der Schmelzfasern des Vlieses. Dadurch können der Vliesstoff und die aufgebrachte streifenförmige Kunststoffkörper über dem Schmelzpunkt der Schmelzfaser des Vlieses erwärmt werden sodass die streifenförmigen Kunststoffkörper in das Vlies eingepresst werden ohne dass sie dabei verformt werden.

Das Vlies kann als ein endkonturnahes Vlies vorgelegt werden. Das endkonturnahe Vlies hat den Vorteil dass es weder während noch nach dem Verfahren zugeschnitten werden muss, hat also vor dem Versteifen bereits einbaunahe Dimensionen.

Außerdem kann das Vlies als ein vorverformtes Vlies vorgelegt werden. Dies vereinfacht den entsprechenden Thermoformprozess, der sich darauf beschränken kann, den streifenförmigen Kunststoffkörper in das Vlies einzupressen.

Bei den aufzubringenden streifenförmigen Kunststoffkörpern kann es sich um einen thermoplastischen Kunststoff der mittels Schmelzschichtverfahren aufgebracht wird. Thermoplastische Kunststoffe haben den Vorteil, dass sie in bestimmten Temperaturbereichen mehrmals verformbar sind. Ein entsprechendes Bauteil kann vorteilhafterweise mit anderen thermoplastischen Anschlussstellen verschweißt werden.

Die streifenförmigen Kunststoffkörper können mithilfe von faserverstärkten Filamenten aufgedruckt werden. Faserverstärkte thermoplastische Kunststoffkörper können bei hohen Belastungen die Biegefestigkeit des Bauteils weiter erhöhen als streifenförmige Kunststoffkörper die nicht faserverstärkt sind.

Gemäß einer weiteren Ausgestaltung der Erfindung handelt es sich bei den aufzubringenden streifenförmigen Kunststoffkörpern um Duroplastrippen, die mittels schichtweiser UV-Härtung von Harzen aufgebracht werden. Duroplastrippen sind vorteilhaft um Vliese zu versteifen, die unter hohem Temperatureinfluss eine erhöhte Biegesteifigkeit aufweisen sollen.

Das erfindungsgemäße Verfahren kann gemäß einer weiteren Ausgestaltung zusätzlich einen Schritt umfassen, bei dem das Vlies vor dem Aufbringen der streifenförmige Kunststoffkörper zugeschnitten wird. Mit dieser Ausgestaltung können vorteilhafterweise aus großen Vliesen erfindungsgemäße Bauteile hergestellt werden.

Gemäß einer vorteilhaften Ausgestaltung der Erfindung umfasst das Verfahren zusätzlich die Entnahme des zuzuschneidenden Vlieses aus einer Vliesstoffstraße. Eine Vorrichtung dieser Art kann das Vlies automatisch zur Verfügung stellen und macht bei der Großserienfertigung von Bauteilen die Anwendung des Verfahrens möglich.

Der zweite Aspekt der Erfindung betrifft ein Bauteil das mithilfe eines erfindungsgemäßen Verfahrens hergestellt wird. Das Bauteil umfasst einen Vliesstoff und einen oder mehreren streifenförmigen Kunststoffkörper. Die Geometrie und die Lage der streifenförmigen Kunststoffkörper können sich vorteilhafterweise nach den geplanten mechanischen Belastungen des Bauteils richten. In dieser Hinsicht reichen Softwareänderungen herzustellende Bauteile entsprechend anzupassen. Solche Bauteile können vorteilhafterweise schnell und kostengerecht realisiert werden.

Vorteilhafte Ausgestaltungen und Ausführungsformen des Verfahrens mit den Merkmalen des Anspruchs 1 ergeben vorteilhafte Ausgestaltungen des Bauteils mit den Merkmalen des Anspruchs 14.

Im Folgenden werden Ausführungsbeispiele der Erfindung anhand einer Zeichnung näher erläutert. Es zeigen:
- Figur 1:: ein Vlies zur Verwendung in einem erfindungsgemäßen Verfahren;
- Figur 2:: ein vergleichbares Beispiel eines Bauteils, bei dem auf einem Vlies ein streifenförmiger Kunststoffkörper mittels 3D-Druck aufgebracht wurde;
- Figur 3:: eine Variante eines Bauteils, bei dem unter Wärme- und Druckzuführung der streifenförmige Kunststoffkörper in das Vlies eingepresst wurde;
- Figur 4:: eine Variante eines Bauteils, bei dem streifenförmige Kunststoffkörper auf beiden Seiten des Vlieses aufgedruckt und eingepresst wurden;
- Figur 5:: eine Variante eines vergleichbaren Beispiels eines Bauteils, bei dem der streifenförmige Kunststoffkörper in Form einer Rautenstruktur aufgedruckt wird.
- Figur 6:: eine Variante eines Bauteils, bei dem streifenförmige Kunststoffkörper in Form einer Wabenstruktur auf beiden Seiten des Vlieses gedruckt werden und in das Vlies eingepresst wurden.

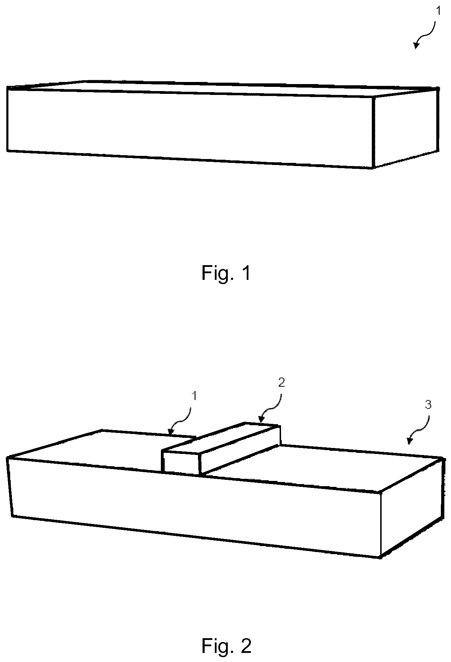

Die Figuren 1-2 zeigen jeweils ein Vlies 1, einen streifenförmigen Kunststoffkörper 2 und ein Bauteil 3.

Figur 1 zeigt ein im ersten Schritt des Verfahrens mittels eines additiven Verfahrens zu bearbeitendes Vlies 1. Bei dem Vlies 1 handelt es sich um ein Mischfaservlies mit hohem Schmelzfaseranteil. Bei dem Vlies 1 handelt es sich beispielsweise um ein solches, welches von der Anmelderin unter der Handelsbezeichnung SAWAFORM® verkauft wird. Der Schmelzpunkt der Schmelzfasern eines Vlieses des genannten Typs liegt beispielsweise bei 110 °C. Beim additiven Verfahren handelt es sich beispielsweise um ein Schmelzschichtverfahren, das zum Aufbringen thermoplastischer Kunststoffe, wie zum Beispiel Polypropylen (PP) geeignet ist. Aus dem Vlies 1, auf dem ein streifenförmiger Kunststoffkörper 2 mittels 3D-Druck aufgebracht wurde, entsteht ein vergleichbares Beispiel eines Bauteils 3, wie es in Figur 2 gezeigt wird.

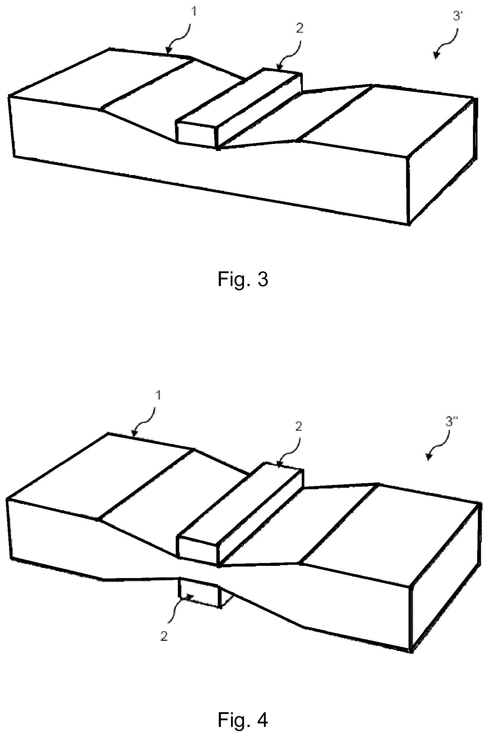

In einer vorteilhaften Ausgestaltung des erfindungsgemäßen Verfahrens wird das im ersten Schritt entstandene Bauteil 3 unter Wärme- und Druckzufuhr so verarbeitet, dass der streifenförmige Kunststoffkörper 2, das auf das Vlies 1 additiv aufgebracht wurde, in dasselbe Vlies 1 eingepresst wird. Da es sich beim streifenförmigen Kunststoffkörper 2 beispielsweise um PP handelt, also einen thermoplastischen Kunststoff, sollte dieser einen höheren Schmelzpunkt vorweisen als die Schmelzfasern des Vlieses 1, damit unter Wärme- und Druckzufuhr der streifenförmige Kunststoffkörper 2 nicht verformt wird, bevor der Schmelzpunkt der Schmelzfasern des Vlieses 1 erreicht wurde. Damit kann der streifenförmige Kunststoffkörper 2 auch als Thermoplast in das Vlies 1 eingepresst werden ohne sich dabei zu verformen. In dieser Ausführungsform wird die Wärme- und Druckzufuhr mit einem Thermoformprozess realisiert. Bei dieser Ausgestaltung des erfindungsgemäßen Verfahrens entsteht die Variante des erfindungsgemäßen Bauteils 3', das in Figur 3 gezeigt wird, und eine einheitliche Dicke aufweist, was ihren Einbau vereinfacht.

Bei Bedarf können die Anzahl, die Geometrie und die Lage der streifenförmige Kunststoffkörper angepasst werden. In einer vorteilhaften Ausgestaltung handelt es sich bei dem streifenförmigen Kunststoffkörper 2 um eine Verstärkungsrippe, die die Biegefestigkeit des Vlieses 1 erhöht.

In einer weiteren Ausgestaltung kann das Vlies 1 vor dem ersten und zweiten Schritt des erfindungsgemäßen Verfahrens beispielsweise in einem Thermoformprozess vorverformt werden. Anschließend werden beispielsweise die streifenförmigen Kunststoffkörper 2 dort aufgebracht werden, wo während des späteren Einsatz des Bauteils 3 erhöhte mechanische Spannungen auftreten.

Figur 4 zeigt eine weitere Ausführungsform des erfindungsgemäßen Bauteils 3", hergestellt mit einer weiteren Ausgestaltung des erfindungsgemäßen Verfahrens. Das erfindungsgemäße Verfahren wurde so geändert, dass auf beiden Seiten des Vlieses 1 jeweils ein streifenförmiger Kunststoffkörper 2 additiv aufgebracht wurde. Das kann beispielsweise mit zwei nacheinander oder parallel durchgeführten 3D-Druckvorgängen realisiert werden. Bei dieser Ausgestaltung sich die auf beiden Seiten des Vlieses 1 aufgebrachten streifenförmigen Kunststoffkörper 4 gegenüber und bilden eine partielle Sandwichstruktur. Das benutzte Vlies 1 sowie der Werkstoff der streifenförmigen Kunststoffkörper 2 sind dieselben wie in den vorherigen Ausführungsformen 3 und 3'.

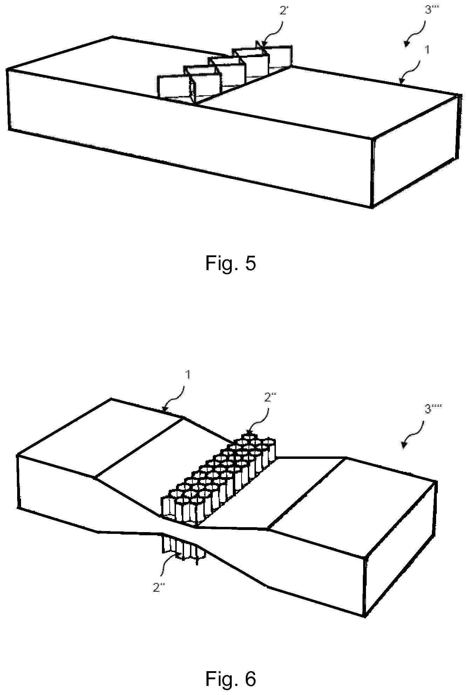

Figur 5 zeigt ein weiteres vergleichbares Beispiel eines Bauteils 3"', bei dem der streifenförmige Kunststoffkörper 2' in Form einer Kreuzrippenstruktur auf das Vlies 1 dreidimensional gedruckt wurde.

Figur 6 zeigt eine weitere Ausführungsform eines erfindungsgemäßen Bauteils 3"", bei dem der streifenförmige Kunststoffkörper 2" in Form einer Wabenstruktur auf beiden Seiten des Vlieses 1 dreidimensional gedruckt wurde und unter Wärme- und Druckzufuhr in das Vlies 1 unter Ausbildung einer partiellen Sandwichstruktur eingepresst wurde.

Des Weiteren kann der streifenförmige Kunststoffkörper 2 mithilfe von faserverstärkten Filamenten aufgebracht werden. Bei den aufzubringenden streifenförmigen Kunststoffkörper 2 und das additive Verfahren kann es sich um Duroplastrippen handeln, die mittels schichtweiser UV-Härtung von Harzen aufgebracht werden.

Bei einer weiteren Ausgestaltung des erfindungsgemäßen Verfahrens wird ein Vlies 1 in einem ersten Schritt in einer Zuschnittsstation zugeschnitten. Daraus entsteht ein zugeschnittenes Vlies 1. Daraufhin werden auf das zugeschnittene Vlies, das beispielsweise dieselbe Faseranteile wie das Vlies 1 aus den ersten beiden Ausgestaltungen vorweist, jeweils der erste und der zweite Verfahrensschritt mithilfe eines 3D-Druckverfahrens unter anschließender Wärme- und Druckzufuhr durchgeführt.

Die verschiedenen Ausgestaltungen der Erfindung ermöglichen eine selektive Erhöhung der Steifigkeit, entsprechend den mechanischen Bauteilbelastungen.

Außerdem ermöglicht die Erfindung eine kostengünstige Fertigung von Bauteilen sowohl für kleinere als auch für größere Fahrzeugserien.

Konstruktive Änderungen bezüglich der Lage und der Geometrie der streifenförmigen Kunststoffkörper können mithilfe von Änderungen im Bereich der ausführenden Software relativ einfach und schnell durchgeführt werden ohne Hardwareänderungen.

Das erfindungsgemäße Verfahren lässt sich außerdem mit entsprechender Produktionslogistik automatisieren. Eine Vliesstoffstraße kann beispielsweise eine Station versorgen in der ein Vlies zugeschnitten und gelagert wird. Die Entnahme von Vlieszuschnitten kann mithilfe von Robotern durchgeführt werden, die sie zum Aufbringen der streifenförmigen Kunststoffkörper 2 positionieren, wobei das Aufbringen der streifenförmigen Kunststoffkörper 2 durch mehrere parallel installierte dreidimensionale Drucker realisiert wird. Die Entnahme der Vlieshalbzeuge 2 aus der Druckstation und deren Positionierung in die Thermoformpresse kann ebenfalls von einem Roboter durchgeführt werden. Die Bauteile können direkt entnommen, gestapelt und/oder verpackt werden.

## Patentansprüche

1. Verfahren zum Herstellen eines Bauteils (3; 3'; 3"; 3"'; 3""), insbesondere für einen Kraftwagen, bei welchem ein Vlies (1) zumindest bereichsweise mit einem Kunststoff versehen wird, wobei auf das Vlies (1) einer oder mehrere streifenförmige Kunststoffkörper (2; 2'; 2") mittels 3D-Druck aufgebracht werden,
**dadurch gekennzeichnet, dass** die aufgebrachte streifenförmige Kunststoffkörper(n) (2; 2'; 2") anschließend unter Wärme- und Druckzufuhr in das Vlies (1) gepresst werden.

2. Verfahren nach Anspruch 1, **dadurch gekennzeichnet, dass** es sich bei den streifenförmigen Kunststoffkörpern (2; 2'; 2") um Verstärkungsrippen handelt.

3. Verfahren nach Anspruch 2, **dadurch gekennzeichnet, dass** die Verstärkungsrippen in den Bereichen des Vlieses aufgedruckt werden, in denen im späteren Einsatz erhöhte Bauteilspannungen auftreten.

4. Verfahren nach Anspruch 2, **dadurch gekennzeichnet, dass** die Verstärkungsrippen in Form von Wabenstrukturen (2") oder Kreuzrippenstrukturen (2') aufgebracht werden.

5. Verfahren nach einem der Ansprüche 1-4, **dadurch gekennzeichnet, dass** das Vlies (1) auf beiden Seiten mit streifenförmigen Kunststoffkörpern (2) bedruckt wird.

6. Verfahren nach Anspruch 5, **dadurch gekennzeichnet, dass** die auf einer Seite des Vlieses (1) aufgebrachten streifenförmigen Kunststoffkörper (2) gegenüber den auf der anderen Seite des Vlieses (1) aufgedruckten streifenförmigen Kunststoffkörpern (2) liegen, wobei die auf beiden Seiten des Vlieses (1) aufgebrachten streifenförmigen Kunststoffkörper (2) unter Ausbildung von partiellen Sandwichstrukturen in das Vlies (1) eingepresst werden.

7. Verfahren nach einem der Ansprüche 1-6, **dadurch gekennzeichnet, dass** es sich bei dem Vlies (1) um einen thermisch verfestigten Vliesstoff oder um ein Mischfaservlies mit Schmelzfasern handelt, wobei der Schmelzpunkt der streifenförmigen Kunststoffkörper (2) über dem der Schmelzfaser des Vlieses (1) liegt.

8. Verfahren nach einem der Ansprüche 1-7, **dadurch gekennzeichnet, dass** das Vlies (1) als ein endkonturnahes Vlies vorgelegt wird.

9. Verfahren nach einem der Ansprüche 1-8, **dadurch gekennzeichnet, dass** das Vlies (1) als ein vorverformtes Vlies vorgelegt wird.

10. Verfahren nach einem der Ansprüche 1-9, **dadurch gekennzeichnet, dass** es sich bei den aufzubringenden streifenförmigen Kunststoffkörpern (2; 2'; 2") um einen thermoplastischen Kunststoff handelt, der mittels Schmelzschichtverfahren aufgebracht wird.

11. Verfahren nach einem der Ansprüche 1-9, **dadurch gekennzeichnet, dass** die streifenförmigen Kunststoffkörper (2) mithilfe von faserverstärkten Filamenten aufgedruckt werden.

12. Verfahren nach einem der Ansprüche 1-9, **dadurch gekennzeichnet, dass** es sich bei den aufzubringenden streifenförmigen Kunststoffkörpern (2) um Duroplastrippen handelt, die mittels schichtweiser UV-Härtung von Harzen aufgebracht werden.

13. Verfahren nach einem der Ansprüche 1-12, **dadurch gekennzeichnet, dass** das Vlies (1) vor dem Aufdrucken der streifenförmigen Kunststoffkörper einer Vliesstoffstraße entnommen und zugeschnitten wird.

14. Bauteil (3; 3'; 3"; 3"'; 3""), hergestellt mit dem Verfahren nach einem der Ansprüche 1 - 13, umfassend ein Vlies (1) und streifenförmige Kunststoffkörper (2; 2'; 2"),wobei die streifenförmige Kunststoffkörper (2; 2'; 2") mittels 3D-Druck aufgebracht sind, **dadurch gekennzeichnet, dass** die streifenförmige Kunststoffkörper (2; 2'; 2") unter Wärme- und Druckzufuhr in das Vlies (1) gepresst sind.

## Claims

1. A method for producing a component (3; 3'; 3"; 3"'; 3""), in particular for a motor vehicle, in which a nonwoven (1) is provided with a plastic material at least in some areas, wherein one or more strip-shaped plastic material bodies (2; 2'; 2") is applied to the nonwoven (1) by means of 3D printing,
**characterized in that** the applied strip-shaped plastic material bodies (2; 2'; 2") are then pressed into the nonwoven (1) by applying heat and pressure.

2. The method according to claim 1, **characterized in that** the strip-shaped plastic material bodies (2; 2'; 2") are reinforcing ribs.

3. The method according to claim 2, **characterized in that** the reinforcing ribs are printed on in those areas of the nonwoven in which increased component stresses arise during later use.

4. The method according to claim 2, **characterized in that** the reinforcing ribs are applied in the shape of honeycomb structures (2") or cross-ribbed structures (2').

5. The method according to one of the claims 1-4, **characterized in that** the nonwoven (1) has strip-shaped plastic bodies (2) printed onto both sides.

6. The method according to claim 5, **characterized in that** the strip-shaped plastic bodies (2) applied onto one side of the nonwoven (1) are located opposite to the strip-shaped plastic bodies (2) printed onto the other side of the nonwoven (1), wherein the strip-shaped plastic bodies (2) applied onto both sides of the nonwoven (1) are pressed into the nonwoven (1) while forming partial sandwich structures.

7. The method according to one of the claims 1-6, **characterized in that** the nonwoven (1) is a thermally bonded nonwoven fabric or a mixed fiber nonwoven with melt fibers, wherein the melting point of the strip-shaped plastic bodies (2) is above that of the melt fiber of the nonwoven (1).

8. The method according to one of the claims 1-7, **characterized in that** the nonwoven (1) is provided as a near-net-shape nonwoven.

9. The method according to one of the claims 1-8, **characterized in that** the nonwoven (1) is produced as a pre-deformed nonwoven.

10. The method according to one of the claims 1-9, **characterized in that** the strip-shaped plastic bodies (2; 2'; 2") to be applied are thermoplastic material which is applied by means of fused deposition modeling.

11. The method according to one of the claims 1-9, **characterized in that** the strip-shaped plastic bodies (2) are printed on by using fiber-reinforced filaments.

12. The method according to one of the claims 1-9, **characterized in that** the strip-shaped plastic bodies (2) to be applied are thermoset ribs which are applied by means of resins that are UV-cured in layers.

13. The method according to one of the claims 1-12, **characterized in that** the nonwoven (1) is taken from a nonwoven fabric line and cut to shape prior to the application of the strip-shaped plastic bodies.

14. A component (3, 3', 3", 3"', 3"") manufactured using the method according to one of the claims 1-13, comprising a nonwoven (1) and strip-shaped plastic bodies (2; 2'; 2"), wherein the strip-shaped plastic bodies (2; 2'; 2") are applied by means of 3D printing, **characterized in that** the strip-shaped plastic material bodies (2; 2'; 2") are pressed into the nonwoven (1) by applying heat and pressure.

## Revendications

1. Procédé de fabrication d'un composant (3 ; 3' ; 3" ; 3'" ; 3""), en particulier pour un véhicule automobile, dans lequel un non-tissé (1) est pourvu au moins par endroits d'une matière plastique, où un ou plusieurs corps en matière plastique en forme de bande (2 ; 2' ; 2") sont appliqués sur le non-tissé (1) au moyen d'une impression 3D,
**caractérisé en ce que** le ou les corps en matière plastique en forme de bande (2 ; 2' ; 2") sont ensuite pressés dans le non-tissé (1) par application de chaleur et de pression.

2. Procédé selon la revendication 1, **caractérisé en ce que** les corps en matière plastique en forme de bande (2 ; 2' ; 2") sont des nervures de renforcement.

3. Procédé selon la revendication 2, **caractérisé en ce que** les nervures de renforcement sont imprimées dans les zones du non-tissé dans lesquelles des contraintes de composants accrues surviennent lors d'une utilisation ultérieure.

4. Procédé selon la revendication 2, **caractérisé en ce que** les nervures de renforcement sont appliquées sous la forme de structures en nid d'abeille (2") ou de structures à nervures croisées (2').

5. Procédé selon l'une quelconque des revendications 1-4, **caractérisé en ce que** le non-tissé (1) est imprimé sur les deux faces avec des corps en matière plastique (2) en forme de bande.

6. Procédé selon la revendication 5, **caractérisé en ce que** les corps en matière plastique (2) en forme de bande appliqués sur un côté du non-tissé (1) se trouvent en face des corps en matière plastique (2) en forme de bande imprimés sur l'autre côté du non-tissé (1), où les corps en matière plastique (2) en forme de bande appliqués des deux côtés du non-tissé (1) sont pressés dans le non-tissé (1) en formant des structures partiellement en sandwich.

7. Procédé selon l'une des revendications 1-6, **caractérisé en ce que** le non-tissé (1) est un non-tissé consolidé thermiquement ou un non-tissé à fibres mélangées avec des fibres fondues, où le point de fusion des corps en matière plastiques (2) en forme de bande étant supérieur à celui de la fibre fondue du non-tissé (1).

8. Procédé selon l'une des revendications 1-7, **caractérisé en ce que** le non-tissé (1) est fourni sous la forme d'un non-tissé de forme quasi définitive.

9. Procédé selon l'une des revendications 1-8, **caractérisé en ce que** le non-tissé (1) est fourni sous la forme d'un non-tissé préformé.

10. Procédé selon l'une des revendications 1-9, **caractérisé en ce que** les corps en matière plastique (2 ; 2' ; 2") en forme de bande à appliquer sont un matériau thermoplastique qui est appliqué au moyen de procédés de dépôt de fil fondu.

11. Procédé selon l'une des revendications 1-9, **caractérisé en ce que** les corps en matière plastique (2) en forme de bande sont imprimés au moyen de filaments renforcés par des fibres.

12. Procédé selon l'une des revendications 1-9, **caractérisé en ce que** les corps en matière plastique (2) en forme de bande à appliquer sont des nervures thermodurcies qui sont appliquées au moyen d'un durcissement par UV en couches de résines.

13. Procédé selon l'une des revendications 1-12, **caractérisé en ce que** le non-tissé (1) est retiré d'une ligne de non-tissé et coupé à la taille avant que les corps en matière plastique en forme de bande ne soient imprimés dessus.

14. Composant (3 ; 3'; 3" ; 3'" ; 3"") fabriqué avec le procédé selon l'une des revendications 1-13, comprenant un non-tissé (1) et des corps en matière plastique (2 ; 2' ; 2") en forme de bandes, où les corps en matière plastique (2 ; 2' ; 2") en forme de bandes sont appliqués au moyen d'une impression 3D, **caractérisé en ce que** les corps en matière plastique (2 ; 2' ; 2") en forme de bandes sont pressés dans le non-tissé (1) par application de chaleur et de pression.
